# EUROPÄISCHE PATENTSCHRIFT

(11) **EP 4 441 812 B1**
(45) Veröffentlichungstag und Bekanntmachung des Hinweises auf die Patenterteilung: **11.03.2026**
(21) Anmeldenummer: 22817606.1
(22) Anmeldetag: 11.11.2022
(51) Int. Cl.: H01M 4/62, H01M 10/056, H01M 10/0562, H01M 10/0565, H01M 4/02

(54) **KATHODE MIT EINEM FLUORHALTIGEN POLYMER SOWIE EINE FESTKÖRPERBATTERIE MIT DER KATHODE**
CATHODE WITH A FLUORINE-CONTAINING POLYMER, AND SOLID-STATE BATTERY COMPRISING THE CATHODE
CATHODE AYANT UN POLYMÈRE CONTENANT DU FLUOR ET BATTERIE À L'ÉTAT SOLIDE COMPRENANT LA CATHODE

(30) Priorität: 01.12.2021 DE 102021131511
(43) Veröffentlichungstag der Anmeldung: 09.10.2024
(73) Patentinhaber: Bayerische Motoren Werke Aktiengesellschaft, 80809 München (DE)
(72) Erfinder: KOERVER, Raimund, 80807 München (DE); SCHARNER, Sebastian, 82299 Türkenfeld (DE); KLUGE, Juliane, 80807 Muenchen (DE)
(86) Internationale Anmeldenummer: PCT/EP2022/081573
(87) Internationale Veröffentlichungsnummer: WO 2023/099162

(56) Entgegenhaltungen:
- EP-A1- 3 772 129
- AUBREY MICHAEL L. ET AL: "Dependence of Linker Length and Composition on Ionic Conductivity and Lithium Deposition in Single-Ion Conducting Network Polymers", MACROMOLECULES, vol. 54, no. 16, 9 August 2021 (2021-08-09), US, pages 7582 - 7589, XP093018040, ISSN: 0024-9297, DOI: 10.1021/acs.macromol.1c00911
- ONISHI KEN ET AL: "Synthesis of Aluminate Polymer Complexes as Single-Ionic Solid Electrolytes", 1 January 1995 (1995-01-01), XP093018013, Retrieved from the Internet <URL:https://pubs.acs.org/doi/10.1021/cm950388a> [retrieved on 20230126]

## Beschreibung

Die Erfindung betrifft eine Kathode sowie eine Festkörperbatterie mit der Kathode.

Im Folgenden wird der Begriff "Festkörperbatterie" synonym für alle im Stand der Technik gebräuchlichen Bezeichnungen für galvanische Elemente und Zellen verwendet, die wenigstens einen Festkörperelektrolyten als Ionen-leitende Verbindung zwischen Kathode und Anode verwenden, wie beispielsweise Metall-Festkörperbatterie, Metall-Festkörper-Akkumulator, All-Solid-State-Battery (ASSB), Zelle, Festkörperzelle, Polymer-Zelle und Akkumulator. Insbesondere sind wieder aufladbare Batterien (Sekundärbatterien) inbegriffen. Auch werden die Begriffe "Batterie", "Zelle" und "elektrochemische Zelle" synonym zum Begriff "Festkörperbatterie" genutzt.

Festkörperbatterien stellen eine Weiterentwicklung von Batterien mit flüssigen Elektrolyten dar. Dabei wird der poröse in Flüssigkeit getränkte Separator, welcher für den Ionentransport und damit für den Ladungsausgleich zwischen Kathode und Anode vorgesehen ist, durch einen lonen-leitenden Festkörper ausgetauscht.

Eine bevorzugte Variante der Festkörperbatterie stellt die Lithiumionen-Festkörperbatterie dar.

Aus dem Stand der Technik bekannte Lithiumionen-Festkörperbatterien weisen zwei verschiedene Elektroden auf, eine positive Elektrode (Kathode) und eine negative Elektrode (Anode). In einer Lithiumionen-Festkörperbatterie umfasst die Kathode ein Kathodenaktivmaterial, das in der Lage ist, reversibel Lithiumionen aufzunehmen bzw. abzugeben. Die Anode kann ein Anodenaktivmaterial aufweisen, wobei das Anodenaktivmaterial entweder Lithiummetall, eine lithiumhaltige Legierung oder ein alternatives Material umfasst, das ebenfalls dazu vorgesehen ist, reversibel Lithiumionen aufzunehmen bzw. abzugeben. Im Stand der Technik übliche Materialien sind bspw. Graphit, Silizium und Siliziumsuboxid (SiOₓ mit O< x< 2).

Falls die Anode unmittelbar nach der Herstellung der Lithiumionen-Festkörperbatterie kein Lithiummetall enthält, aber bei den ersten Ladevorgängen zumindest eine anteilige Abscheidung von Lithiummetall stattfindet, spricht man von einem "lithiumfreien" Anodenkonzept. "Lithiumfrei" bedeutet in diesem Zusammenhang, dass die Anode im ungeladenen Zustand nach der Herstellung und vor einer Formation der Zelle frei von metallischem Lithium ist. Das metallische Lithium wird erst durch einen entsprechenden Ladevorgang an der Anode gebildet.

Die beiden Elektroden sind über einen Festkörperseparator Lithiumionenleitend miteinander verbunden. Darüber hinaus separiert der Festkörperseparator die Kathode räumlich von der Anode. Der Festkörperseparator gewährleistet den Lithiumionentransport zwischen der Kathode und der Anode. Der Festkörperseparator leitet also den elektrischen Strom durch Lithiumionentransport im Festkörper. Damit stellt der Festkörperseparator einen Festkörperlithiumionenleiter dar.

Festkörperseparatoren lassen sich in keramische, polymerbasierte und gelbasierte Festkörperelektrolyte einteilen. Als keramische Festkörperelektrolyte werden insbesondere sulfidische und oxidische Festkörperelektrolyte verwendet, die aufgrund ihrer elektrochemischen Stabilität bei gleichzeitig hoher Lithiumionenleitfähigkeit immer mehr an Bedeutung gewinnen. Polymerbasierte Festkörperelektrolyte sind hingegen lösungsmittelfrei und beruhen auf der Ionenleitung entlang von Polymerketten. Als polymerbasierter Festkörperelektrolyt kann beispielsweise Polyethylenoxid verwendet werden, das mit einem lithiumhaltigen Leitadditiv versetzt ist. Gelbasierte Festkörperelektrolyte enthalten eine feste Polymermatrix, die von einem flüssigen Elektrolyten durchsetzt ist, der die Ionenleitung gewährleistet.

Die US 2019/0157723 A1 beschreibt eine Lithiumionen-Festkörperbatterie, die eine Kathode mit einem Kathodenaktivmaterial und eine Anode mit einem Anodenaktivmaterial enthält. Zusätzlich umfasst die Anode einen Anodenstromkollektor. Das Anodenaktivmaterial ist so gewählt, dass es mit metallischem Lithium eine Legierung oder eine Verbindung bilden kann. Das Anodenaktivmaterial und das Kathodenaktivmaterial sind durch einen Festkörperelektrolyten voneinander räumlich separiert. Der Festkörperelektrolyt besteht aus einem sulfidischen Material, wie Li₆PS₅Cl mit Argyrodite-Struktur. Das Kathodenaktivmaterial besteht insbesondere aus bekannten lithiumhaltigen Schichtoxiden wie NMC. Das Anodenaktivmaterial kann ausgewählt sein aus der Gruppe bestehend aus amorphem Kohlenstoff, Gold, Platin, Palladium, Silizium, Silber, Aluminium, Bismut, Zinn und Zink sowie Kombinationen davon.

Die oben beschriebene Lithiumionen-Festkörperbatterie verwendet ein lithiumfreies Anodenkonzept, da während der ersten Ladevorgänge metallisches Lithium zwischen dem Anodenstromkollektor und dem Anodenaktivmaterial abgeschieden wird. Das metallische Lithium ist somit nach der Herstellung zunächst nicht in der Zelle vorhanden.

Die WO 2020 0725524 A1 offenbart eine Lithiumionen-Festkörperbatterie umfassend einen Anodenstromkollektor, einen Festkörperelektrolyten sowie eine Übergangsschicht zwischen dem Anodenstromkollektor und dem Festkörperelektrolyten. Die Übergangsschicht ist ausgewählt aus der Gruppe bestehend aus Zink, Zinn, Magnesium, Silber, Aluminium, Indium, Bismut, Lithiumlegierung, Lithiumoxid und Lithiumperoxid sowie Kombinationen davon. Insbesondere besteht der Festkörperelektrolyt aus einem lithiumhaltigen Granat, vorzugsweise aus Lithiumlanthanzirkonat (LLZO) mit der chemischen Formel Li₇La₃Zr₂O₁₂, welches den Ladungsausgleich zwischen der Anode und Kathode durch den Transport von Lithiumionen gewährleistet. Auch hier findet wieder ein lithiumfreies Anodenkonzept Anwendung.

Aus der US 2021/01226281 A1 sind keramische Festkörperelektrolyte bekannt, welche mit der allgemeinen Formel beschrieben werden können:

Li_{1-a-b-c-d}PₐT_{b}A_{c}X_{d}

wobei 0 ≤ a ≤ 0,129, 0 ≤ b ≤ 0,096, 0,316 ≤ c ≤ 0,484, 0,012 ≤ d ≤ 0,125 ist und worin T ein Element aus der Gruppe bestehend aus As, Si, Ge, Al und B bedeutet, X ein oder mehrere Halogene bedeutet oder N, und A eines oder mehrere von S und Se ist.

Die WO 2019/051305 A1 offenbart eine Kathode, Anode und einen Festkörperelektrolyten, der zwischen der Kathode und der Anode angeordnet ist. Mindestens die Kathode, Anode oder der Festkörperelektrolyt umfasst ein Keramikmaterial, das Lithium (Li), Bor (B) und Schwefel (S) umfasst. Das Keramikmaterial zeigt mehrere kristalline Phasen und weist eine Gesamtzusammensetzung auf, die durch ein a:b:c-Molverhältnis von Li:B:S gekennzeichnet ist, wobei c/b in einem Bereich von etwa 1 bis etwa 3 liegt.

Die EP 3 496 202 A1 beschreibt Lithiumionen-leitende Lithium-Yttriumhalogenide der allgemeinen Formel Li_{6-3z}Y_{z}X₆, worin 0<z<2 ist und X Cl oder Br bedeutet. Die Lithium-Yttriumhalogenide werden als Festkörperelektrolyt in einer Lithiumionen-Festkörperbatterie verwendet.

Die US 10 811 688 B2 und die US 2017/0338492 A1 offenbaren eine Lithiumionen-Festkörperbatterie mit einem Festkörperelektrolyten auf der Basis eines ionenleitenden Polymers, einer Ionenquelle wie Li₂O, Na₂O, MgO, CaO, ZnO, KOH, NaOH, CaCl₂, AlCl₃, MgCl₂, LiTFSI (Lithium-bis-trifluoromethansulfonimid), LiBOB (Lithium-bis(oxalat)borat) oder Kombinationen davon und eines Elektronenakzeptors. Als Lithiumionen-leitendes Polymer werden Flüssigkristallpolymere, Polyetheretherketon (PEEK), Polyphenylensulfid (PPS) und semikristalline Polymere mit einer Kristallinität von mehr als 30% genannt.

Die US 2019/0051939 A1 zeigt eine Lithiumionen-Festkörperbatterie, die ein Polylithiumacrylat als polymerbasierten Festkörperelektrolyten enthält. Der Festkörperelektrolyt umfasst ferner ein hydrophiles Polymer, ein Lithiumsalz und eine Lewissäure.

Zur Gewährleistung einer ausreichenden Ionenleitung zwischen Elektrode und Festkörperelektrolyt muss ein inniger Kontakt zwischen den Aktivmaterialien der Kathode und dem Festkörperelektrolyten bestehen. Dazu wird der Festkörperelektrolyt mit in die Kathode integriert. Dies geschieht durch Bereitstellung von sogenannten Kompositelektroden, also einem Gemisch des Festkörperelektrolyten und des Aktivmaterials.

Die Kombination von Festkörperelektrolyt und Kathodenaktivmaterial zieht jedoch eine Reihe von Problemen nach sich.

Im regulären Betrieb einer Lithiumionen-Festkörperbatterie kann es durch die stetige Re- und De-Lithiierung der Aktivmaterialien zu Volumenänderungen innerhalb dieser Materialien kommen. Diese Volumenänderungen können über einen längeren Zeitraum zu mechanischen Spannungen in der Zelle führen. Durch die mechanischen Spannungen können wiederum Risse innerhalb des Festkörperelektrolyten entstehen, welche den ordnungsgemäßen Betrieb der Zelle beeinträchtigen können. Rissbildung stellt insbesondere ein Problem für starre keramische Festkörperelektrolyte dar.

Im Weiteren erfordern keramische Festkörperelektrolyte bei der Herstellung häufig einen Sinterschritt bei Temperaturen zwischen 650° und 1200°. Solche Temperaturen können jedoch eine Kompositkathode, insbesondere das in der Kompositkathode vorliegende Kathodenaktivmaterial, irreparabel beschädigen.

Abhilfe können entweder organische Binder oder Polymerelektrolyte wie Polyethylenoxid (PEO) im Kathodenkomposit schaffen. Bei organischen Bindern fehlt jedoch die ionische Leitfähigkeit, und bei Polymeren wie PEO reicht die oxidative Stabilität oftmals nicht für die Potentiale der Elektrodenmaterialien auf der Kathodenseite (> 4V) aus.

Der Erfindung liegt die Aufgabe zugrunde, die Nachteile der aus dem im Stand der Technik bekannten Festkörperbatterien zu vermeiden und eine Festkörperbatterie bereitzustellen, die einfach in der Herstellung ist und über einen längeren Zeitraum stabil betrieben werden kann.

Die Aufgabe wird erfindungsgemäß gelöst durch das Bereitstellen einer Kathode für eine Festkörperbatterie nach Anspruch 1.

Vorteilhafte Ausführungsformen der erfindungsgemäßen Kathode für eine Festkörperbatterie sind in den Unteransprüchen angegeben, die wahlweise miteinander kombiniert werden können.

Erfindungsgemäß umfasst die Kathode für eine Festkörperbatterie die folgenden Komponenten:
(A) mindestens ein Kathodenaktivmaterial;
(B) mindestens ein erstes fluorhaltiges Polymer mit einem wenigstens teilweise fluorierten oder perfluorierten Grundgerüst, wobei das erste fluorhaltige Polymer mindestens eine ionische Gruppe der folgenden Formel (I) enthält: 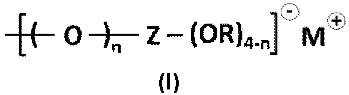 worin,
   - M ein Kation ist, ausgewählt aus der Gruppe bestehend aus Proton und Alkalimetallen;
   - n eine ganze Zahl von 1 bis 4 ist;
   - Z ein Zentralion bedeutet, ausgewählt aus der Gruppe bestehend aus Aluminium und Bor; und
   - R einen einbindigen wahlweise fluorsubstituierten Kohlenwasserstoffrest darstellt und ausgewählt ist aus der Gruppe bestehend aus C₁-C₈-Alkyl, C₂-C₁₀-Alkenyl, C₂-C₁₀-Alkinyl, C₆-C₁₂-Cycloalkyl und C₆-C₁₂-Aryl;
wobei die ionische Gruppe über mindestens ein verbrückendes Sauerstoffatom der ionischen Gruppe mit dem Grundgerüst des ersten fluorhaltigen Polymers verbunden ist.

Die Erfindung beruht auf dem Grundgedanken, eine Kombination aus einem Kathodenaktivmaterial und einem ersten fluorhaltigen Polymer für die Kathode einer Festkörperbatterie bereitzustellen, wobei die erfindungsgemäß vorgeschlagene Kombination eine Reihe von vorteilhaften Eigenschaften aufweist.

Das fluorhaltige Polymer weist als ein wesentliches Merkmal ionische Gruppen auf. Die ionischen Gruppen ermöglichen innerhalb der Kathode einen nahezu ungehinderten Ionentransport. Das erste fluorhaltige Polymer ist somit ein Ionenleiter. Die Zugabe von klassischen Leitsalzen wie bspw. Lithiumhexafluorophosphat ist daher nicht notwendig. Die Ionenleitung erfolgt über das fluorhaltige Polymer. Das erste fluorhaltige Polymer weist aufgrund dieser funktionellen ionischen Gruppen auch eine Überführungszahl nahe von 1 auf.

Gleichzeitig besitzen fluorhaltige Polymere mit einem wenigstens teilweise fluorierten oder perfluorierten Grundgerüst eine hohe chemische und elektrochemische Stabilität. Folglich eignen sich diese besonders für einen Einsatz in einer Kathode für eine Festkörperbatterie.

Das erste fluorhaltige Polymer ist zudem mechanisch flexibel und elastisch. Die Polymere können daher die Volumenänderungen des Kathodenaktivmaterials während des Zellbetriebs ausgleichen. Das Kathodenaktivmaterial kann sich also während des Re- und De-Lithiierens ungehindert ausdehnen und wieder zusammenziehen. Die Kombination aus Kathodenaktivmaterial und dem erstem fluorhaltigen Polymer kann diese Volumenänderungen kompensieren und mechanische Spannungen innerhalb der Zelle verhindern.

Darüber hinaus ergibt sich ein synergistischer Effekt zwischen dem Kathodenaktivmaterial als "starre" Komponente und dem fluorhaltigen Polymer als "weiche" Komponente. Das fluorhaltige Polymer als "weiche" Komponente kann sich bevorzugt an die starre Form des Kathodenaktivmaterials anpassen. Dadurch kann die Kontaktfläche erhöht werden und die Ionenleitung zwischen dem fluorhaltigem Polymer und dem Kathodenaktivmaterial ist so gewährleistet.

Geeignete Kathodenaktivmaterialien für die Kathode können alle im Stand der Technik bekannten Kathodenaktivmaterialien sein.

Bevorzugte Kathodenaktivmaterialien für die erfindungsgemäße Kathode umfassen Lithium-Kobaltoxid (LCO), Lithium-Nickeloxid (LNO), Lithium-Nickel-Kobalt-Aluminiumoxid (NCA), Lithium-Nickel-Mangan-Kobaltoxid (NMC), lithium- und manganreiches Lithium-Nickel-Mangan-Kobaltoxid bzw. Lithium-Nickel-Manganoxid (LMR), Lithium-Manganoxid (LMO), Lithium-Eisen-Phosphat (LFP), Lithium-Mangan-Eisen-Phosphat (LMFP), Lithium-Nickel-Manganoxid-Spinell (LNMO) und Derivate sowie Kombinationen davon.

Lithium-Nickel-Mangan-Cobalt-Verbindungen sind auch unter der Abkürzung NMC bekannt, vereinzelt auch alternativ unter der technischen Abkürzung NCM. NMC-basierte Kathodenmaterialien werden insbesondere in Lithiumionen-Batterien für Fahrzeuge eingesetzt. NMC als Kathodenmaterial weist eine vorteilhafte Kombination wünschenswerter Eigenschaften auf, beispielsweise eine hohe spezifische Kapazität, einen reduzierten Cobalt-Anteil, eine hohe Hochstromfähigkeit und eine hohe intrinsische Sicherheit, was sich beispielsweise in einer ausreichenden Stabilität bei einer Überladung zeigt.

NMC können mit der allgemeinen Formeleinheit Li_{α}NiₓMn_{y}Co_{z}O₂ mit x+y+z = 1 beschrieben werden, wobei α die Angabe des stöchiometrischen Anteils an Lithium bezeichnet und üblicherweise zwischen 0,8 und 1,15 liegt. Bestimmte Stöchiometrien werden in der Literatur als Zahlentripel angegeben, beispielsweise NMC 811, NMC 622, NMC 532 und NMC 111. Das Zahlentripel gibt jeweils den relativen Gehalt von Nickel : Mangan : Cobalt an. Mit anderen Worten ist beispielsweise NMC 811 ein Kathodenmaterial mit der allgemeinen Formeleinheit LiNi_{0,8}Mn_{0,1}Co_{0,1}O₂, also mit α = 1. Weiterhin können auch die sogenannten lithium- und manganreichen NMCs oder LMR mit der allgemeinen Formeleinheit Li_{1+ε}(NiₓMn_{y}Co_{z})_{1-ε}O₂ verwendet werden, wobei ε insbesondere zwischen 0,1 und 0,6, bevorzugt zwischen 0,2 und 0,4 liegt. Diese lithiumreichen Schichtoxide sind auch als Overlithitated (Layered) Oxides (OLO) bekannt.

Erfindungsgemäß enthält das erste fluorhaltige Polymer mindestens eine ionische Gruppe der allgemeinen Formel (I).

Die ionische Gruppe ist ein Ion umfassend ein Kation M⁺ und ein Anion [-(O)ₙ-Z-(OR)₄₋ₙ]⁻.

In der allgemeinen Formel (I) wird die negative Ladung des Anions stöchiometrisch durch die positive Ladung des Kations ausgeglichen.

Das Kation ist ausgewählt aus der Gruppe bestehend aus Proton und Alkalimetallen. Bevorzugt ist das Kation Lithium.

Z bedeutet in der Formel (I) ein Zentralion ausgewählt aus der Gruppe bestehend aus Aluminium und Bor. Die ionischen Gruppen sind somit entweder Aluminate oder Borate, und die Anionen der Formel (I) sind entsprechend einfach negativ geladen.

Die Reste R stellen einen jeweils einbindigen wahlweise fluorsubstituierten Kohlenwasserstoffrest dar und sind unabhängig voneinander ausgewählt aus der Gruppe bestehend aus C₁-C₈-Alkyl, C₂-C₁₀-Alkenyl, C₂-C₁₀-Alkinyl, C₆-C₁₂-Cycloalkyl und C₆-C₁₄-Aryl. Im Sinne der Erfindung bedeutet einbindig, dass die Kohlenwasserstoffreste R jeweils über ein einzelnes Sauerstoffatom an das Zentralion Z binden.

Der Begriff C₁-C₈-Alkyl umfasst im Sinne der Erfindung lineare oder verzweigte gesättigte Kohlenwasserstoffreste mit einem bis acht Kohlenstoffatomen. Bevorzugte Kohlenwasserstoffreste umfassen beispielsweise Methyl, Ethyl, n-Propyl, Isopropyl, n-Butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl und iso-Octyl.

Der Begriff C₂-C₁₀-Alkenyl umfasst im Sinne der Erfindung lineare oder verzweigte mindestens teilweise ungesättigte Kohlenwasserstoffreste mit zwei bis zehn Kohlenstoffatomen, wobei die Kohlenwasserstoffreste zumindest eine C-C-Doppelbindung aufweisen. Bevorzugte Kohlenwasserstoffreste umfassen beispielsweise Ethenyl, 1-Propenyl, 2- Propenyl, 1-n-Butenyl, 2-n-Butenyl, isoButenyl, 1-Pentenyl, 1-Hexenyl, 1-Heptenyl, 1-Octenyl, 1-Nonenyl und 1- Decenyl.

Der Begriff C₂-C₁₀-Alkinyl umfasst im Sinne der Erfindung lineare oder verzweigte mindestens teilweise lineare ungesättigte Kohlenwasserstoffreste mit zwei bis zehn Kohlenstoffatomen, wobei die Kohlenwasserstoffreste zumindest eine C-C-Dreifachbindung aufweisen. Bevorzugte Kohlenwasserstoffreste umfassen beispielsweise Ethinyl, 1-Propinyl, 2-Propinyl, 1-n-Butinyl, 2-n-Butinyl, iso-Butinyl, 1-Pentinyl, 1- Hexinyl, 1-Heptinyl, 1-Octinyl, 1-Noninyl und 1- Decinyl.

Der Begriff C₆-C₁₂-Cycloalkyl umfasst im Sinne der Erfindung zyklische, gesättigte Kohlenwasserstoffreste mit sechs bis zwölf Kohlenstoffatomen. Bevorzugte Kohlenwasserstoffreste umfassen beispielsweise Cyclopropyl, Cyclobutyl, Cyclopentyl, Cyclohexyl, Cycloheptyl, Cyclohexyl, Cyclononyl und Cyclodecanyl.

Der Begriff C₆-C₁₄-Aryl umfasst im Sinne der Erfindung aromatische Kohlenwasserstoffreste mit sechs bis zwölf Kohlenstoffatomen. Bevorzugte Kohlenwasserstoffreste umfassen beispielsweise Phenyl, Naphthyl und Anthracyl.

In einer bevorzugten Ausführungsform sind die Kohlenwasserstoffreste R wenigstens teilweise fluorsubstituiert, bevorzugt vollständig fluorsubstituiert.

Fluorsubstituierte Kohlenwasserstoffreste ergeben Anionen, die besonders stabile ionische Gruppen der Formel (I) bilden.

n ist eine ganze Zahl von 1 bis 4. Damit definiert n eine Anzahl von Bindungen des Zentralions Z an das wenigstens teilweise fluorierte oder perfluorierte Grundgerüst des ersten fluorhaltigen Polymers. Die Bindung des Zentralions Z an das erste fluorhaltige Polymer erfolgt stets über mindestens ein verbrückendes Sauerstoffatom der ionischen Gruppe.

Die Anzahl der Reste -OR ist in der allgemeinen Formel (I) mit 4-n angegeben. Somit ist die Anzahl der Reste -OR direkt mit der Anzahl der Bindungen (n) des Zentralions Z an das wenigstens teilweise fluorierte oder perfluorierte Grundgerüst des ersten fluorhaltigen Polymers gekoppelt.

In Abhängigkeit von n kann der Verknüpfungsgrad der ionischen Gruppe eingestellt werden. Generell sind zwei Arten von Verknüpfungen durch die Wahl von n gegeben:
- ionische Endgruppen (n=1); und
- ionische Vernetzungsgruppen (n=2, 3 oder 4).

In einer Ausführungsform weist das erste fluorhaltige Polymer mindestens eine ionische Endgruppe der allgemeinen Formel (I) auf, worin n gleich 1 ist.

Entspricht n in Formel (I) gleich 1, ist das Zentralion Z über ein verbrückendes Sauerstoffatom in der ionischen Gruppe mit dem Grundgerüst des ersten fluorhaltigen Polymers verbunden. Ein solches Zentralion Z bindet dann an drei Reste -OR. Ein Beispiel für eine solche ionische Endgruppe ist durch die folgende Formel (II) gegeben:

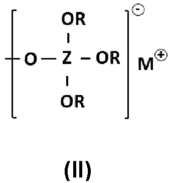

In einer weiteren Ausführungsform weist das erste fluorhaltige Polymer mindestens eine ionische Vernetzungsgruppe der allgemeinen Formel (I), worin n gleich 2, 3 oder 4 ist.

Entspricht n in Formel (I) gleich 2, ist das Zentralion Z über zwei verbrückende Sauerstoffatome in der ionischen Gruppe mit dem Grundgerüst eines ersten fluorhaltigen Polymers verbunden. Ein solches Zentralion Z bindet dann an zwei Reste -OR. Ein Beispiel für eine solche ionische Struktur ist durch die folgende Formel (III) gegeben:

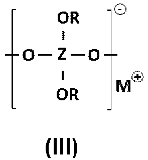

Entspricht n in Formel (I) gleich 3, ist das Zentralion Z über drei verbrückende Sauerstoffatome in der ionischen Gruppe mit dem Grundgerüst eines ersten fluorhaltigen Polymers verbunden. Ein solches Zentralion Z bindet dann an einen Rest -OR. Ein Beispiel für eine solche ionische Struktur ist durch die folgende Formel (IV) gegeben:

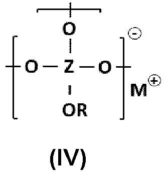

Entspricht n in Formel (I) gleich 4, ist das Zentralion Z über vier verbrückende Sauerstoffatomen in der ionischen Gruppe mit dem Grundgerüst eines ersten fluorhaltigen Polymers verbunden. Ein solches Zentralion Z bindet an keine Reste -OR. Ein Beispiel für eine solche ionische Struktur ist durch die folgende Formel (V) gegeben:

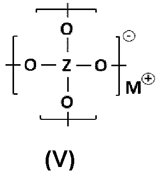

Generell kann das erste fluorhaltige Polymer sowohl ionische Endgruppen der Formel (II) als auch ionische Vernetzungsgruppen der Formeln (III) bis (V) aufweisen. Es ist aber auch denkbar, dass das erste fluorhaltige Polymer nur ionische Endgruppen oder nur ionische Vernetzungsgruppen enthält.

In einer bevorzugten Ausführungsform weist die allgemeine Formel (I) mindestens eines oder mehrere der folgenden Merkmale auf:
- Z bedeutet Aluminium;
- M bedeutet Lithium; und
- R stellt einen linearen verzweigten oder zyklischen C₁-C₄-Perfluoralkylrest dar.

Der Begriff C₁-C₄-Perfluoralkyl umfasst im Sinne der Erfindung lineare oder verzweigte gesättigte perfluorierte Kohlenwasserstoffreste mit 1 bis 4 Kohlenstoffatomen.

Beispiele für geeignete Perfluoralkylreste sind Trifluormethyl, Perfluoro-Ethyl, Perfluoro-Propyl, Perfluoro-Isopropyl, Perfluoro-n-Butyl, Perfluoro-sec-Butyl, Perfluoro-iso-Butyl und Perfluoro-tert-Butyl.

In einer besonders bevorzugten Ausführungsform ist die ionische Gruppe eine ionische Endgruppe der folgenden Formel (VI):

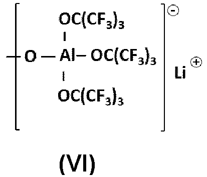

In einer Ausführungsform ist das Grundgerüst des ersten fluorhaltigen Polymers vollständig fluoriert und weist wiederholende Einheiten von Tetrafluorethylen (-C₂F₄-) auf. Das Grundgerüst des ersten fluorhaltigen Polymers leitet sich somit vom Polytetrafluorethylen (PTFE) ab. Zudem ist das Grundgerüst unverzweigt (linear) und besteht im Wesentlichen aus Fluor und Kohlenstoff.

Das erste fluorhaltige Polymer kann mindestens eine perfluorierte Seitenkette umfassen. Die perfluorierte Seitenkette dient der Verknüpfung des Grundgerüsts und einer ionischen Gruppe der allgemeinen Formel (I).

Die Erfindung ist in Bezug auf die perfluorierte Seitenkette nicht eingeschränkt. Es können alle im Stand der Technik bekannten perfluorierten Seitenketten für perfluorierte Polymere vorhanden sein. Insbesondere können die aus der DE 28 17 315 bekannten perfluorierten Seitenketten verwendet werden, auf die hier Bezug genommen wird.

In einer bevorzugten Ausführungsform enthält das Grundgerüst des ersten fluorhaltigen Polymers mindestens eine Seitenkette der folgenden Formel (VII): 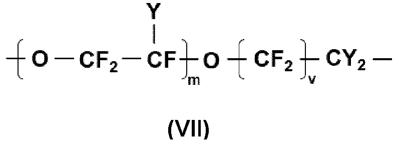 worin
- Y ein Fluoratom oder einen linearen, verzweigten oder zyklischen C₁-C₈-Perfluoralkylrest bedeutet;
- m 0,1 oder 2 ist; und
- v 0 oder 1 ist;
wobei die ionische Gruppe der allgemeinen Formel (I) an den CY₂-Rest der Seitenkette gebunden ist.

Dabei kann das Zentralion Z einer ionischen Gruppe der allgemeinen Formel (I) über ein verbrückendes Sauerstoffatom der ionischen Gruppe an den CY₂-Rest der Seitenkette gebunden sein. Die Seitenkette stellt somit ein Verknüpfungselement zwischen dem Grundgerüst und der ionischen Gruppe dar.

Eine ionische Endgruppe ist lediglich über eine Seitenkette an das Grundgerüst des ersten fluorhaltigen Polymers gebunden. Ionische Vernetzungsgruppen sind stattdessen über mehrere Seitenketten an ein Grundgerüst eines fluorhaltigen Polymers gebunden. Es ist aber auch denkbar, dass die ionischen Vernetzungsgruppen die Grundgerüste von mehreren ersten fluorhaltigen Polymeren miteinander vernetzen.

Entspricht beispielsweise in der allgemeinen Formel (I) n gleich 2, ist die ionische Vernetzungsgruppe über zwei Seitenketten an das Grundgerüst eines ersten Polymers gebunden.

In einer weiteren Ausführungsform ist das erste fluorhaltige Polymer ein Copolymer der folgenden Formeln (VIII) oder (IX): 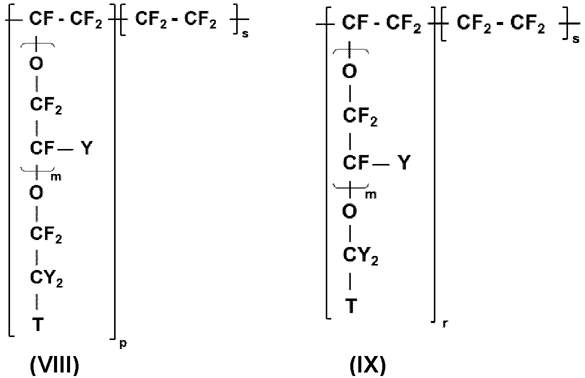 worin,
- m 0,1 oder 2 ist;
- p 1 bis 10 ist;
- r 1 bis 10 ist;
- s 1 bis 15 ist; und
- Y ein Fluoratom oder einen linearen, verzweigten oder zyklischen C₁-C₁₀-Perfluoralkylrest bedeutet; und
- T eine ionische Gruppe der allgemeinen Formel (I) darstellt.

Auch hier erfolgt die Bindung der ionischen Gruppe T der allgemeinen Formel (I) an den -CY₂-Rest. Die ionische Gruppe der allgemeinen Formel (I) kann so auf einfache Weise in das fluorhaltige Polymer integriert werden.

Darüber hinaus sind die Seitenketten aufgrund der Fluorsubstitution chemisch stabil gegenüber den oxidativen Spannungen während des Betriebs der Zelle.

Die Herstellung des ersten fluorhaltigen Polymers kann über die Synthese von Hydroxygruppen-haltigen Fluorpolymeren erfolgen, die in Gegenwart von Perfluoralkoholen mit Lithiumaluminiumhydrid (LiAlH₄) in Perfluorhexan (C₆F₁₄) bei 70-80°C umgesetzt werden können. Die Kathode kann ferner ein zweites fluorhaltiges Polymer umfassen, wobei das zweite fluorhaltige Polymer ausgewählt ist aus der Gruppe der sulfonierten perfluorierten Polymere.

In Bezug auf die sulfonierten perfluorierten Polymere ist die Erfindung nicht weiter eingeschränkt. Prinzipiell können alle im Stand der Technik üblichen sulfonierten perfluorierten Polymere verwendet werden.

Beispielsweise können die aus der DE 28 17 315 bekannten Polymere verwendet werden.

In einer bevorzugten Ausführungsform sind die sulfonierten perfluorierten Polymere auf Basis von Polytetrafluorethylen wie NAFION^{®}, oder von diesen abgeleitet.

In weiteren Ausführungsform weisen die sulfonierten perfluorierten Polymere Perfluoralkylseitenketten mit funktionellen Gruppen auf.

In Bezug auf die funktionellen Gruppen der Perfluoralkylseitenketten ist das zweite fluorhaltige Polymer nicht eingeschränkt. Grundsätzlich können alle im Stand der Technik üblichen funktionellen Gruppen für Perfluoralkylseitenketten verwendet werden, solange diese ionisch sind sowie Lithiumionen als Kationen aufweisen.

Vorzugsweise weisen die sulfonierten perfluorierten Polymere auf Basis von Polytetrafluorethylen SO₃Li-haltige, SO₂-N⁻Li⁺-SO₂CF₃-haltige und/oder SO₂C(CN)₂Li-haltige Perfluoralkylseitenketten auf.

Geeignete Beispiele für SO₂C(CN)₂Li-haltige Perfluoralkylseitenketten sind Strukturen der folgenden Formel (X):

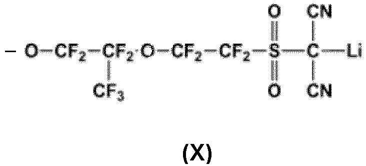

Geeignete Beispiele für SO₃Li-haltige Perfluoralkylseitenketten sind Strukturen der folgenden Formel (XI):

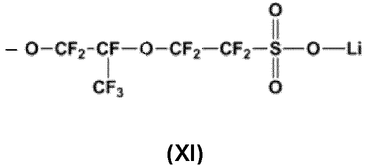

Geeignete Beispiele für SO₂-N⁻Li⁺-SO₂CF₃-haltige Perfluoralkylseitenketten sind Strukturen der folgenden Formel (XII):

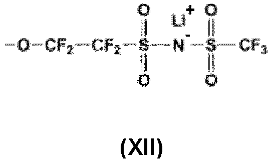

Die Perfluoralkylseitenketten sind in Bezug auf die oben genannten Beispiele nicht eingeschränkt, insbesondere nicht auf die gezeigten Perfluorethoxy- und Perfluorisopropoxy-Gruppen. Grundsätzlich können die vorgeschlagenen SO₃Li-haltigen, SO₂-N⁻Li⁺-SO₂CF₃-haltigen und/oder SO₂C(CN)₂Li-haltigen Perfluoralkylseitenketten beliebige verzweigte oder unverzweigte Perfluoralkoxy-Gruppen aufweisen.

Vorzugsweise kann durch das Einbringen eines zweiten fluorhaltigen Polymers der Lithiumgehalt der Kathode gezielt eingestellt werden. Zusätzlich kann auch die Lithiumionenleitfähigkeit der Kathode eingestellt werden. Die Einstellung der Lithiumionenleitfähigkeit erfolgt primär über die Wahl der funktionellen Gruppe der Perfluoralkylseitenketten. Damit stellt das zweite fluorhaltige Polymer einen zweiten Lithiumionenleiter dar.

In einer bevorzugten Ausführungsform umfasst die Kathode mindestens eine Lösungsmittelkomponente, wobei die Lösungsmittelkomponente ausgewählt ist aus der Gruppe bestehend aus Perfluorcarbonaten, Perfluoraromaten, Perfluorether und Perfluorester sowie Kombinationen und Derivaten davon.

Als Perfluoraromat kann beispielsweise Hexafluorobenzol eingesetzt.

Besonders bevorzugt bildet die Lösungsmittelkomponente mit dem ersten und/oder zweiten fluorhaltigen Polymer ein Gel. Das Gel erfüllt dabei die Funktion eines Gelelektrolyten mit der Aufgabe, den Ionentransport in der Kathode zu gewährleisten. Der Gelelektrolyt ist mechanisch flexibel, wodurch dieser die Volumenänderung des Kathodenaktivmaterials während des Zellbetriebs ausgleichen kann. Beschädigungen der Festkörperzelle aufgrund von mechanischen Spannungen können so vermieden werden.

In einer besonders bevorzugten Ausführungsform umfasst die Kathode die folgenden Komponenten, jeweils bezogen auf das Gesamtgewicht der Kathode:
(A) 40 - 98 Gew. % mindestens eines Kathodenaktivmaterials;
(B) 0,1 - 30 Gew. % mindestens eines ersten fluorhaltigen Polymers;
(C) 0 - 30 Gew. % mindestens eines zweiten fluorhaltigen Polymers vorzugsweise ausgewählt aus der Gruppe der sulfonierten perfluorierten Polymere, vorzugsweise auf Basis von Polytetrafluorethylen (PTFE) mit SO₃Li-haltigen, SO₂-N⁻Li⁺-SO₂CF₃-haltigen und/oder SO₂C(CN)₂Li-haltigen Perfluoralkylseitenketten; und
(D) 0 - 70 Gew. %, vorzugsweise 0,1 - 70 Gew. % mindestens einer Lösungsmittelkomponente bestehend aus Perfluorcarbonaten, Perfluoraromaten, Perfluorether und Perfluorester sowie Kombinationen und Derivaten davon;
wobei sich die Anteile der Komponenten (A) bis (D) zu 100 Gew. % ergänzen.

Ferner kann die Kathode weitere Zusätze enthalten, wie sie aus dem Stand der Technik bekannt sind, beispielsweise Binder und Leitadditive. Mit Bezug auf die weiteren Zusätze ist die Erfindung nicht eingeschränkt.

Ferner betrifft die Erfindung eine Festkörperbatterie mit einer Kathode, einer Anode und einem Festkörperseparator, der die Kathode von der Anode räumlich trennt und mit der Kathode und Anode ionenleitend in Kontakt steht.

Der Festkörperseparator umfasst mindestens einen keramischen polymerbasierten oder gelbasierten Festkörperelektrolyten oder Kombinationen davon.

Mit Bezug auf den als Festkörperseparator verwendeten Festkörperelektrolyten ist die Erfindung nicht eingeschränkt. Grundsätzlich können alle im Stand der Technik bekannten Separatoren auf Basis von Festkörperelektrolyten verwendet werden.

Der Festkörperseparator kann mindestens einen Festkörperelektrolyten, insbesondere mindestens einen keramischen, polymerbasierten oder gelbasierten Festkörperelektrolyten und Kombinationen davon umfassen.

In einer Ausführungsform umfasst der Festkörperelektrolyt ein Lithium-Phosphorsulfid und/oder ein Lithium-Borsulfid mit der allgemeinen Formel Li_{c}T_{y}S_{z}R_{q}, worin T Bor oder Phosphor bedeutet, und R ein Halogen bedeutet, und wobei 2≤*c*≤7, 1≤y≤7, 3≤z≤13, 0≤*q*≤1 ist.

Weitere Beispiele für geeignete Festkörperelektrolyte umfassen die aus der US 2021/0126281 A1 bekannten Verbindungen der allgemeinen Formel:

Li_{1-a-b-c-d}PₐT_{b}A_{c}X_{d}

wobei 0 ≤ a ≤ 0,129, 0 ≤ b ≤ 0,096, 0,316 ≤ c ≤ 0,484, 0,012 ≤ d ≤ 0,125 ist und worin T ein Element aus der Gruppe bestehend aus As, Si, Ge, Al und B bedeutet, X ein oder mehrere Halogene bedeutet oder N, und A eines oder mehrere von S und Se ist, und die aus der WO 2019/051305 A1 bekannten Zusammensetzungen auf der Grundlage von Lithium (Li), Bor (B) und Schwefel (S), die durch ein a:b:c-Molverhältnis von Li:B:S gekennzeichnet sind, wobei c/b in einem Bereich von etwa 1 bis etwa 3 liegt.

In einer anderen Ausführungsform umfasst der Festkörperelektrolyt einen lithiumhaltigen Granat mit der allgemeinen Formel LiₙLaₘM'ₚM"_{q}ZrₛOₜ, worin 4<n<8,5, 1,5<m<4, 0≤p≤2, 0≤q≤2, 0≤s≤2,5 und 10<t≤13 ist, und wobei M' und M" unabhängig voneinander ausgewählt sind aus der Gruppe bestehend aus Aluminium, Molybdän, Wolfram, Niob, Antimon, Calcium, Barium, Strontium, Cerium, Hafnium, Rubidium, Gallium und Tantal.

In einer Weiterbildung der Erfindung umfasst der lithiumhaltige Granat eine Verbindung mit der allgemeinen Formel Li_{w}LaᵥZrₖOₕ · gAl₂O₃, worin 5≤w≤8, 2≤v≤5, 0≤k≤3, 10≤h≤13 und 0≤g≤1 ist.

In einer bevorzugten Ausführungsform ist der Festkörperelektrolyt ein lithiumhaltiger Granat mit der allgemeinen Formel LiⱼLa₃Zr_{b}O₁₂ · gAl₂O₃, worin 5≤j≤8, 0<b≤2,5, und 0≤g≤1 ist.

Als polymerbasierte Festkörperelektrolyte können insbesondere Mischungen von Polyethylenoxid und Derivaten davon mit einem lithiumhaltigen Leitsalz eingesetzt werden. Weitere Beispiele umfassen ionenleitende Polymere auf Basis von Flüssigkristallpolymeren, Polyetheretherketon (PEEK), Polyphenylensulfid (PPS) und semikristallinen Polymeren mit einer Kristallinität von mehr als 30%, wie die aus der US 2017/0338492 A1 und der US 10 811 688 B2 bekannten Zusammensetzungen, auf die Bezug genommen wird.

Ferner können auch die in der US 2019/0051939 A1 beschriebenen Festkörperelektrolyte verwendet werden, die ein Polylithiumacrylat zusammen mit einem hydrophilen Polymer, einem Lithiumsalz und einer Lewissäure enthalten.

Darüber hinaus können die in der EP 3 496 202 A1 beschriebenen Lithiumionen-leitenden Lithium-Yttriumhalogenide der allgemeinen Formel Li_{6-3z}Y_{z}X₆ als Festkörperelektrolyt verwendet werden, worin 0<z<2 ist und X Cl oder Br bedeutet. Die Lithium-Yttriumhalogenide können als Festkörperelektrolyt in einer Lithiumionenbatterie eingesetzt werden.

Der Festkörperseparator umfasst mindestens einen Festkörperelektrolyten. Es ist aber auch denkbar, dass mehrere unterschiedliche Festkörperelektrolyte verwendet werden.

Bevorzugt umfasst der Festkörperseparator einen der oben genannten oxidischen Festkörperelektrolyte, besonders bevorzugt einen lithiumhaltigen Granat wie Lithium-Lanthanzirkonat (LLZO).

Bevorzugt ist der Festkörperseparator als eine Schicht ausgeführt, die einlagig oder mehrlagig sein kann. Insbesondere können mehrere Lagen mit unterschiedlichen Festkörperseparatoren vorhanden sein. Die Zusammensetzung der Lagen kann stufenweise oder graduell variieren. Bevorzugt ist anodenseitig ein oxidischer Festkörperelektrolyt angeordnet.

Die Anode umfasst einen Anodenstromkollektor und wahlweise eine Anodenschicht.

Der Anodenstromkollektor kann aus allem im Stand der Technik bekannten Materialien für Anodenstromkollektoren bestehen. Vorzugsweise ist der Anodenstromkollektor aus Kupfer gefertigt.

Die Anodenschicht der Festkörperbatterie kann alle im Stand der Technik bekannten Strukturen und Materialien für Anoden umfassen.

Beispielsweise kann die Anodenschicht ein Anodenaktivmaterial und/oder eine Keimschicht umfassen.

Zudem kann die Anodenschicht als Kompositschicht vorliegen, die ein Gemenge von Anodenaktivmaterialien und weitere Komponenten wie Binder, Leitadditive und Festkörperelektrolyte sowie Kombinationen davon umfasst.

Schließlich kann die Anodenschicht ein- oder mehrlagig ausgebildet sein.

Bevorzugte Komponenten für das Anodenaktivmaterial in der Lithiumionen-Festkörperbatterie umfassen Lithiummetall, Zink, Magnesium, Silber, Aluminium, Indium, Zinn, Bismut, Silizium, Siliziumsuboxid, Graphit, Silizium-Kohlenstoff-Komposit, Zinn-Kohlenstoff-Komposit, Siliziumlegierung und Lithiumlegierung sowie Kombinationen davon.

In einer Ausführungsform umfasst die Anode im ungeladenen Zustand nach der Herstellung kein Lithiummetall. Das Lithiummetall wird an der Anode erst durch einen Ladevorgang nach der Herstellung der Lithiumionen-Festkörperbatterie abgeschieden.

Daher erfolgt eine Abscheidung von Lithiummetall auf den Anodenstromkollektor oder wahlweise auf einer Keimschicht, die auf den Anodenstromkollektor aufgebracht sein kann.

Jedoch ist die Keimschicht im Gegensatz zum Anodenaktivmaterial nicht in der Lage, das beim Laden der Lithiumionen-Festkörperbatterie an der Anode abgeschiedene Lithiummetall vollständig aufzunehmen. Aus diesen Grund erfüllt die Keimschicht eine andere Funktion als das Anodenaktivmaterial, nämlich beim Ladevorgang der Lithiumionen-Festkörperbatterie die Lithiumabscheidung an der Anode zu steuern. Dies kann bereits durch die Verwendung einer Keimschicht mit einer Schichtdicke von 1 nm - 10 µm erreicht werden, bevorzugt 5 nm - 3 µm, besonders bevorzugt 10 - 2000 nm. In einer weiteren Ausgestaltung kann eine poröse Keimschicht vorgesehen sein.

Im Allgemeinen kann die Keimschicht die gleichen Komponenten umfassen, wie das oben beschriebene Anodenaktivmaterial, abgesehen von Lithium oder Lithiumlegierungen.

Geeignete Beispiele für die Komponenten der Keimschicht umfassen Zink, Magnesium, Silber, Aluminium, Indium, Zinn, Bismut, Silizium, Siliziumsuboxid, Graphit, Silizium-Kohlenstoff-Komposit, Zinn-Kohlenstoff-Komposit, Siliziumlegierung sowie Kombinationen davon.

Die Kathode umfasst einen Kathodenstromkollektor und eine Kathodenschicht auf dem einen Kathodenstromkollektor.

Der Kathodenstromkollektor kann aus allem im Stand der Technik bekannten Materialien für Kathodenstromkollektoren bestehen. Vorzugsweise ist der Kathodenstromkollektor aus Aluminium gefertigt.

Die Kathodenschicht umfasst mindestens ein Kathodenaktivmaterial und ein erstes fluorhaltiges Polymer.

Geeignete Kathodenaktivmaterialien für die erfindungsgemäße Kathode umfassen Lithium-Kobaltoxid (LCO), Lithium-Nickeloxid (LNO), Lithium-Nickel-Kobalt-Aluminiumoxid (NCA), Lithium-Nickel-Mangan-Kobaltoxid (NMC), lithium- und manganreiches Lithium-Nickel-Mangan-Kobaltoxid bzw. Lithium-Nickel-Manganoxid (LMR), Lithium-Manganoxid (LMO), Lithium-Eisen-Phosphat (LFP), Lithium-Mangan-Eisen-Phosphat (LMFP), Lithium-Nickel-Manganoxid-Spinell (LNMO) und Derivate sowie Kombinationen davon.

In einer vorteilhaften Weiterbildung der Erfindung ist die Festkörperbatterie eine Lithiumionen-Festkörperbatterie.

Die Lithiumionen-Festkörperbatterie umfasst eine Kathode mit einer Kathodenschicht, die ein Kathodenaktivmaterial und ein erstes fluorhaltiges Polymer umfasst, eine Anode sowie einen Festkörperseparator auf Basis eines keramischen, insbesondere eines oxidischen, Festkörperelektrolyten.

In dieser Ausführungsform ergibt sich ein synergistischer Effekt zwischen der erfindungsgemäßen Kathode und dem keramischen Festkörperseparator. Zum einen ermöglicht das fluorhaltige Polymer eine ionische Anbindung der Kathode an dem oxidischen Separator, zum anderen kann der Festkörperseparator getrennt von der Kathode hergestellt werden. Mit anderen Worten kann der keramische Festkörperseparator, insbesondere ein oxidischer Festkörperelektrolyt, gesondert bei hohen Temperaturen gesintert werden und erst nachträglich mit der Kathode zusammengefügt werden. Folglich muss die Kathode bei der Herstellung keinen hohen Temperaturen ausgesetzt werden. Trotzdem entsteht aufgrund des erfindungsgemäß in der Kathode eingesetzten Festkörperelektrolyten auf Basis eines fluorhaltigen Polymers ein inniger Kontakt zu dem keramischen Festkörperelektrolyten.

Eine weitere vorteilhafte Kombination ergibt sich aus der Zusammensetzung einer Lithiumionen-Festkörperbatterie bestehend aus der oben beschriebenen Kathode, einem oxidischen Festkörperseparator und einer Anode, die eine Anodenschicht umfasst, wobei die Anodenschicht ein Lithiummetall umfasst.

In dieser Anordnung dient der keramische, insbesondere oxidische, Festkörperseparator als eine besonders stabile Schutzschicht zwischen dem Lithiummetall der Anodenschicht und dem Aktivmaterial der Kathodenschicht. Eine unerwünschte Reaktion zwischen den Bestandteilen der Kathode und dem Lithiummetall der Anode kann so vermieden werden. Folglich findet auf der Anodenseite keine oxidative Zersetzung statt. Auf der Kathodenseite bleibt das erste fluorhaltige Polymer intakt, da es durch die Schutzschicht von dem Lithiummetall der Anode räumlich separiert wird. Die Leistung der Lithiumionen-Festkörperbatterie ist somit nur geringfügig bis gar nicht eingeschränkt.

Die vorgeschlagenen Lithiumionen-Festkörperbatterien sind einfach in der Herstellung und weisen eine verbesserte Zyklenbeständigkeit auf.

Die zyklische Alterungsbeständigkeit der Testzellen kann über die Zyklenzahl bestimmt werden. Die Testzellen werden zunächst mit einer konstanten Ladestromstärke bis zu einer maximal erlaubten Zellspannung geladen. Die obere Abschaltspannung wird so lange konstant gehalten bis ein Ladestrom auf einen eingegebenen Wert abgesunken oder die maximale Ladezeit erreicht ist. Dies ist auch als I/U-Ladung bekannt. Im Anschluss erfolgt die Entladung der Testzellen mit einer konstanten Entladestromstärke bis zu einer gegebenen Abschaltspannung. Die Ladung kann je nach angestrebter Zyklenzahl wiederholt werden. Dabei müssen die obere Abschaltspannung und die untere Abschaltspannung sowie die gegebenen Lade- oder Entladestromstärken experimentell gewählt werden. Dies gilt auch für den Wert auf den der Ladestrom abgesunken ist.

Die Erfindung wird nachfolgend anhand von Ausführungsbeispielen mit Bezug auf die beigefügten Zeichnungen näher beschrieben. In den Zeichnungen zeigen:
- Figur 1 in einer schematischen Darstellung eine Lithiumionen-Festkörperbatterie mit nur einem ersten fluorhaltigen Polymer;
- Figur 2 in einer schematischen Darstellung die Lithiumionen-Festkörperbatterie aus Figur 1 mit einem zweiten fluorhaltigen Polymer; und
- Figur 3 in einer schematischen Darstellung die Lithiumionen-Festkörperbatterie aus Figur 2 mit einer Lösungsmittelkomponente.

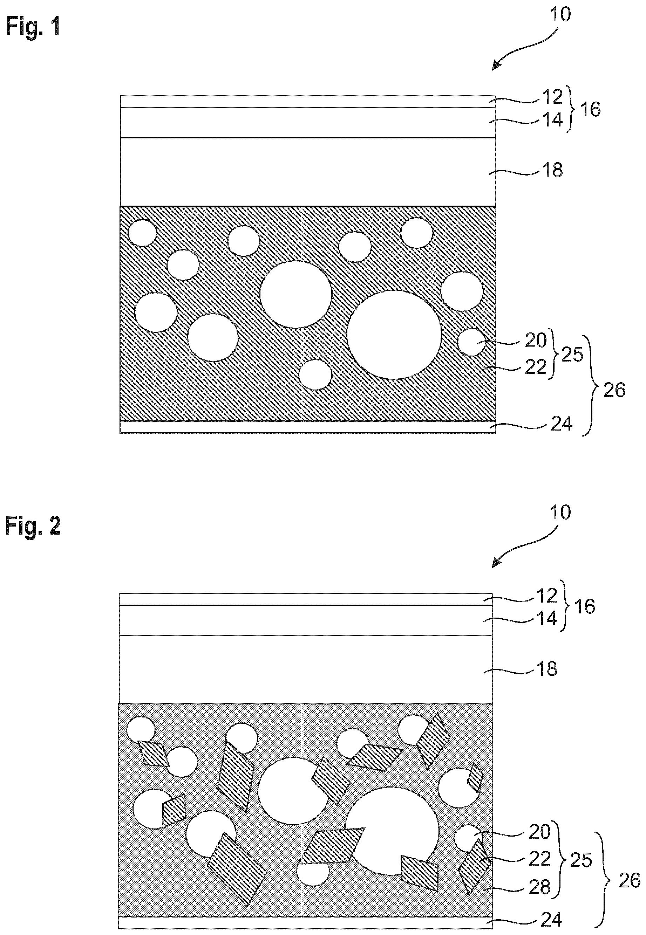

Figur 1 zeigt eine Lithiumionen-Festkörperbatterie 10. Die Lithiumionen-Festkörperbatterie 10 weist eine Anode 16 und eine Kathode 26 auf. Die Anode 16 und die Kathode 26 sind über einen Festkörperseparator 18 ionisch leitend miteinander verbunden. Darüber hinaus trennt der Festkörperseparator 18 die Anode 16 räumlich von der Kathode 26.

Unter ionisch leitend wird an dieser Stelle die Leitung von Lithiumionen innerhalb des Festkörperseparators 18 verstanden.

Die Anode 16 umfasst einen Anodenstromkollektor 12 und eine Anodenschicht 14 auf dem Anodenstromkollektor 12.

Anodenstromkollektoren sind bekannt und bestehen üblicherweise aus einem metallischen Werkstoff. Der Anodenstromkollektor 12 ist für die elektrische Kontaktierung der Anodenschicht 14 vorgesehen. Dabei kann der Anodenstromkollektor 12 beispielsweise aus Kupfer gefertigt sein.

Die Anodenschicht 14 umfasst mindestens ein Anodenaktivmaterial.

Das Anodenaktivmaterial ist dazu vorgesehen Lithiumionen reversibel aufzunehmen und wieder abzugeben. Vorzugsweise ist dafür das Anodenaktivmaterial zusammengesetzt aus Komponenten der Gruppe bestehend aus Lithiummetall, Zink, Magnesium, Silber, Aluminium, Indium, Zinn, Bismut, Silizium, Siliziumsuboxid, Grafit, Silizium-Kohlenstoff-Komposit, Zinn-Kohlenstoff-Komposit, Siliziumlegierung und Lithiumlegierung sowie Kombinationen davon.

Das Anodenaktivmaterial umfasst bevorzugt ein Lithiummetall.

Die Kathode 26 umfasst einen Kathodenstromkollektor 24 und eine Kathodenschicht 25 auf dem Kathodenstromkollektor 24.

Üblicherweise bestehen Kathodenstromkollektoren aus einem metallischen Werkstoff wie beispielsweise Aluminium.

Die Kathodenschicht 25 liegt als Komposit vor und umfasst ein Gemenge aus einem Kathodenaktivmaterial 20 und einem ersten fluorhaltigen Polymer 22. Insbesondere liegt das Kathodenaktivmaterial 20 verteilt in einer Matrix des ersten fluorhaltigen Polymers 22 vor.

Das Kathodenaktivmaterial 20 ist vorzugsweise ausgewählt aus der Gruppe bestehend aus Lithium-Cobaltoxid (LCO), Lithium-Nickeloxid (LNO), Lithium-Nickel-Cobalt-Aluminiumoxid (NCA), Lithium-Nickel-Mangan-Cobaltoxid (NMC), Lithium- und manganreiches Lithium-Nickel-Mangan-Cobaltoxid bzw. Lithium-Nickel-Manganoxid (LMR), Lithium-Manganoxid (LMO), Lithium-Eisen-Phosphat (LFP), Lithium-Mangan-Eisenphosphat (LMFP), Lithium-Nickel-Manganoxid-Spinell (LNMO) und Derivate sowie Kombinationen davon. Das Kathodenaktivmaterial 20 ist dazu vorgesehen, Lithiumionen reversibel aufzunehmen und wieder abzugeben.

Das erste fluorhaltige Polymer 22 weist ein teilweise fluoriertes oder perfluoriertes Grundgerüst auf, sowie mindestens eine ionische Gruppe der allgemeinen Formel (I) enthält: 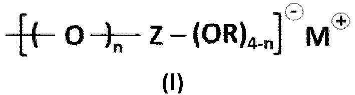 worin,
- M ein Kation ist, ausgewählt aus der Gruppe bestehend aus Proton und Alkalimetallen;
- n eine ganze Zahl von 1 bis 4 ist;
- Z ein Zentralion bedeutet, ausgewählt aus der Gruppe bestehend aus Aluminium und Bor; und
- R einen einbindigen wahlweise fluorsubstituierten Kohlenwasserstoffrest darstellt und ausgewählt ist aus der Gruppe bestehend aus C₁-C₈-Alkyl, C₂-C₁₀-Alkenyl, C₂-C₁₀-Alkinyl, C₆-C₁₂-Cycloalkyl und C₆-C₁₂-Aryl;
wobei die ionische Gruppe über mindestens ein verbrückendes Sauerstoffatom der ionischen Gruppe mit dem Grundgerüst des ersten fluorhaltigen Polymers verbunden ist.

Vorzugsweise ist in der allgemeinen Formel (I) M Lithium, n gleich 1 und Z Aluminium. Der Kohlenwasserstoffrest R ist besonders bevorzugt ein Trifluormethylrest und/oder ein Perfluoro-tert-butylrest. Somit ist das erste fluorhaltige Polymer ein Lithiumionenleiter.

Ferner kann die Kathodenschicht 25 mindestens einen Binder (hier nicht gezeigt) umfassen, wobei der Binder ausgewählt ist aus der Gruppe bestehend aus Polyvinylidenfluorid (PVDF), hydrierter Acrylnitrilbutadien-Kautschuk (HNBR), Carboxymethylcellulose (CMC), Styrol-Butadien-Kautschuk (SBR), Polyacrylat (PAA), Lithium-Polyacrylat (LiPAA) und Polyvinylalkohol (PVA) sowie Kombinationen davon.

Die Kathodenschicht 25 kann ebenfalls ein Leitadditiv beinhalten (hier nicht gezeigt), wobei das Leitadditiv ausgewählt ist, aus der Gruppe bestehend aus Leitruß, Kohlenstoffnanoröhren, Graphen, Graphit und Kohlenstoffnanofasern sowie Kombinationen davon.

Der Festkörperseparator 18 ist zwischen der Anode 16 und der Kathode 26 angeordnet, und umfasst mindestens einen keramischen, polymerbasierten oder gelbasierten Festkörperelektrolyten oder Kombinationen davon.

Als Festkörperelektrolyt können insbesondere die folgenden Zusammensetzungen eingesetzt werden:
- ein Lithium-Phosphorsulfid und/oder ein Lithium-Borsulfid mit der allgemeinen Formel Li_{c}T_{y}S_{z}R_{q}, worin T Bor oder Phosphor bedeutet, und R ein Halogen bedeutet, und wobei 2≤*c*≤7, 1≤y≤7, 3≤*z*≤13, 0≤*q*≤1 ist;
- eine Verbindung der allgemeinen Formel Li_{1-a-b-c-d}PₐT_{b}A_{c}X_{d}, wobei 0 ≤ a ≤ 0,129, 0 ≤ b ≤ 0,096, 0,316 ≤ c ≤ 0,484, 0,012 ≤ d ≤ 0,125 ist und worin T ein Element aus der Gruppe bestehend aus As, Si, Ge, Al und B bedeutet, X ein oder mehrere Halogene bedeutet oder N, und A eines oder mehrere von S und Se ist;
- eine Zusammensetzung auf der Grundlage von Lithium (Li), Bor (B) und Schwefel (S), die durch ein a:b:c-Molverhältnis von Li:B:S gekennzeichnet sind, wobei c/b in einem Bereich von etwa 1 bis etwa 3 liegt;
- ein lithiumhaltiger Granat mit der allgemeinen Formel LiₙLaₘM'ₚM"_{q}ZrₛOₜ, worin 4<*n*<8,5*,* 1,5*<m<*4, 0≤*p*≤2, 0≤*q*≤2, 0≤*s*≤2,5 und 10<*t*≤13 ist, und wobei M' und M" unabhängig voneinander ausgewählt sind aus der Gruppe bestehend aus Aluminium, Molybdän, Wolfram, Niob, Antimon, Calcium, Barium, Strontium, Cerium, Hafnium, Rubidium, Gallium und Tantal;
- ein lithiumhaltiger Granat mit der allgemeinen Formel Li_{w}LaᵥZrₖOₕ·gAl₂O₃, worin 5≤*w*≤8, 2≤*v*≤5, 0≤*k*≤3, 10≤*h*≤13 und 0≤g≤1 ist;
- ein lithiumhaltiger Granat mit der allgemeinen Formel LiⱼLa₃Zr_{b}O₁₂ ·gAl₂O₃, worin 5≤*j*≤8, 0<*b*≤2,5, und 0≤g≤1 ist;
- ein ionenleitendes Lithium-Yttriumhalogenid der allgemeinen Formel Li_{6-3z}Y_{z}X₆, worin 0<z<2 ist und X Cl oder Br bedeutet;
- ein ionenleitendes Polymer auf der Basis von Polyethylenoxid, Flüssigkristallpolymeren, Polyetheretherketon (PEEK), Polyphenylensulfid (PPS) und semikristallinen Polymeren mit einer Kristallinität von mehr als 30%, zusammen mit einem Lithiumsalz, bevorzugt Li₂O, LiTFSI (Lithium-bis-trifluoromethansulfonimid), LiBOB (Lithium-bis(oxalat)borat) oder Kombinationen davon; und
- Polylithiumacrylat zusammen mit einem hydrophilen Polymer, einem Lithiumsalz und einer Lewissäure.

Der Festkörperseparator 18 verbindet die Kathode 26 leitend mit der Anode 16. Insbesondere stellt der Festkörperseparator 18 eine Schutzschicht zwischen der Anodenschicht 14 der Anode 16 und der Kathodenschicht 25 der Kathode 26 dar.

Der Festkörperseparator 18 kann ein- oder mehr mehrlagig ausgebildet sein. Insbesondere können mehrere Lagen mit unterschiedlichen Festkörperseparatoren vorhanden sein. Die Zusammensetzung der Lagen kann stufenweise oder graduell variieren.

Gemäß einer Ausführungsform kann der Festkörperseparator 18 einen anodenseitig angeordneten Bereich umfassen, der eine höhere Beständigkeit gegenüber Lithiummetall aufweist, als ein kathodenseitig angeordneter Bereich des Festkörperseparators. Der anodenseitig angeordnete Bereich umfasst bevorzugt einen oxidischen Festkörperelektrolyten, besonders bevorzugt einen lithiumhaltigen Granat wie Lithium-Lanthanzirkonat (LLZO). Die hier gezeigte Lithiumionen-Festkörperbatterie 10 zeigt eine besonders gute ionische Anbindung der Kathode 26 an den Festkörperseparator 18. Dabei ist es insbesondere von Vorteil, dass das erste fluorhaltige Polymer 22 mechanisch flexibel ist und sich an die starre und unflexible Form des Festkörperseparators 18 anpassen und Volumenänderungen zuverlässig ausgleichen kann.

Figur 2 zeigt die Lithiumionen-Festkörperbatterie 10 aus Figur 1 mit einer veränderten Zusammensetzung der Kathode 26.

Die Kathode 26 in Figur 2 umfasst eine Kathodenschicht 25, die als Komposit vorliegt und ein Gemenge aus einem Kathodenaktivmaterial 20, einem ersten fluorhaltigen Polymer 22 und einer Lösungsmittelkomponente 28 umfasst.

Darüber hinaus kann die Lithiumionen-Festkörperbatterie 10 die gleichen Bestandteile enthalten, wie bereits oben beschrieben.

Im Unterschied zu Figur 1, weist die Kathode in Figur 2 eine Lösungsmittelkomponente 28 auf.

Die Lösungsmittelkomponente 28 ist vorzugsweise ausgewählt aus der Gruppe bestehend aus Perfluorcarbonaten, Perfluoraromaten, Perfluorether und Perfluoresther sowie Kombinationen und Derivaten davon.

Die Lösungsmittelkomponente 28 bildet mit dem ersten fluorhaltigen Polymer einen Gelelektrolyten. Vorzugsweise weist der Gelelektrolyt eine gelartige Konsistenz auf. Der Gelelektrolyt ist daher formstabil, jedoch auch mechanisch flexibel und dehnbar.

Aufgrund der gelartigen Konsistenz ist eine gute ionische Anbindung zwischen dem Kathodenaktivmaterial 20 und dem Gelelektrolyten gegeben.

Darüber hinaus ist auch eine ionische Anbindung zwischen dem Gelelektrolyten und dem Festkörperseparator 18 gegeben.

Zudem ermöglicht das Vorliegen eines Gelelektrolyts mit gelartiger Konsistenz die Volumenausdehnung des Kathodenaktivmaterials 20 im regulären Betrieb der Lithiumionen-Festkörperbatterie 10 zu kompensieren.

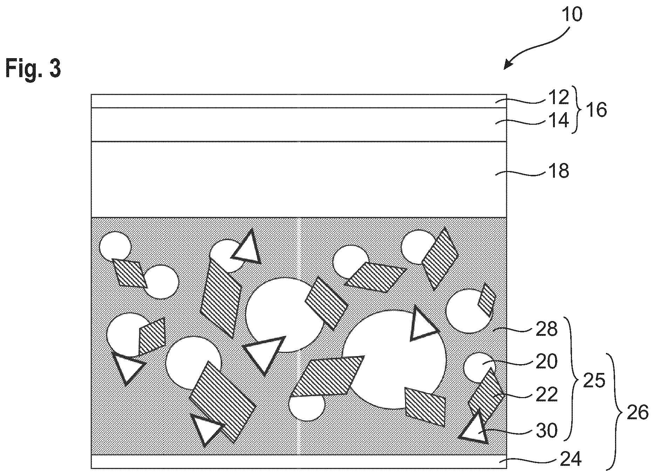

Figur 3 zeigt die Lithiumionen-Festkörperbatterie 10 aus Figur 2 mit einer anderen Zusammensetzung der Kathode 26.

Die Kathode 26 in Figur 3 umfasst eine Kathodenschicht 25, die ein Gemenge aus einer Lösungsmittelkomponente 28, einem Kathodenaktivmaterial 20, einem ersten fluorhaltigen Polymer 22 und einem zweiten fluorhaltigen Polymer 30 umfasst.

Der Unterschied zwischen Figur 2 und Figur 3 besteht also in dem Vorhandensein eines zweiten fluorhaltigen Polymers in der Kathode 26.

Darüber hinaus kann die Lithiumionen-Festkörperbatterie 10 die gleichen Bestandteile enthalten, wie bereits oben beschrieben.

Das zweite fluorhaltige Polymer 30 ist vorzugsweise ausgewählt der Gruppe der sulfonierten perfluorierten Polymere mit SO₃Li-haltigen und/oder SO₂C(CN)₂Li-haltigen Perfluoralkylseitenketten, vorzugsweise ein Polytetrafluorethylen (PTFE) wie Nafion^{®}, oder von Nafion^{®} abgeleitete Polymere. Weitere mögliche Seitenketten sind SO₂-N⁻Li⁺-SO₂CF₃-haltige Perfluoralkylseitenketten.

Damit enthält das zweite fluorhaltige Polymer 30 mit Lithiumionen abgesättigte perfluorierte Seitenketten. Das zweite fluorhaltige Polymer 30 ist somit ebenfalls ein Lithiumionenleiter.

Vorzugsweise bildet das zweite fluorhaltige Polymer 30 mit dem ersten fluorhaltigen Polymer 22 und der Lösungsmittelkomponente 28 ein Gel.

Mit anderen Worten liegt das Kathodenaktivmaterial 20 in einem Gel bestehend aus dem ersten fluorhaltigen Polymer 22, dem zweiten fluorhaltigen Polymer 30 und der Lösungsmittelkomponente 28 vor.

Das Gel ermöglicht eine ionische Anbindung des Kathodenaktivmaterials 20 an den Festkörperseparator 18 und den Kathodenstromkollektor 24.

## Patentansprüche

1. Kathode (26) für eine Festkörperbatterie (10), wobei die Kathode (26) die folgenden Komponenten umfasst:
(A) mindestens ein Kathodenaktivmaterial (20);
(B) mindestens ein erstes fluorhaltiges Polymer (22) mit einem wenigstens teilweise fluorierten oder perfluorierten Grundgerüst, wobei das erste fluorhaltige Polymer (22) mindestens eine ionische Gruppe der folgenden Formel (I) enthält: 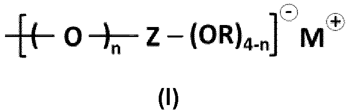 ; worin,
- M ein Kation ist, ausgewählt aus der Gruppe bestehend aus Proton und Alkalimetallen;
- n eine ganze Zahl von 1 bis 4 ist;
- Z ein Zentralion bedeutet, ausgewählt aus der Gruppe bestehend aus Aluminium und Bor; und
- R einen einbindigen wahlweise fluorsubstituierten Kohlenwasserstoffrest darstellt und ausgewählt ist aus der Gruppe bestehend aus C₁-C₈-Alkyl, C₂-C₁₀-Alkenyl, C₂-C₁₀-Alkinyl, C₆-C₁₂-Cycloalkyl und C₆-C₁₂-Aryl;
wobei die ionische Gruppe über mindestens ein verbrückendes Sauerstoffatom der ionischen Gruppe mit dem Grundgerüst des ersten fluorhaltigen Polymers (22) verbunden ist.

2. Kathode (26) nach Anspruch 1, **dadurch gekennzeichnet, dass** der Kohlenwasserstoffrest R wenigstens teilweise fluorsubstituiert ist, bevorzugt vollständig fluorsubstituiert.

3. Kathode (26) nach einem der vorhergehenden Ansprüche, **dadurch gekennzeichnet, dass** das erste fluorhaltige Polymer (22) mindestens eine ionische Endgruppe der allgemeinen Formel (I) enthält, worin n = 1 ist, und/oder mindestens eine ionische Vernetzungsgruppe der allgemeinen Formel (I), worin n= 2, 3 oder 4 ist.

4. Kathode (26) nach einem der vorhergehenden Ansprüche, **dadurch gekennzeichnet, dass** die allgemeine Formel (I) eines oder mehrere der folgenden Merkmale aufweist:
- Z bedeutet Aluminium
- M bedeutet Lithium; und
- R stellt einen linearen, verzweigten oder zyklischen C₁-C₁₀ Perfluoralkylrest dar, vorzugsweise einen Trifluormethylrest, besonders bevorzugt einen Perfluoro-tert-butylrest.

5. Kathode (26) nach einem der vorhergehenden Ansprüche, **dadurch gekennzeichnet, dass** das Grundgerüst des ersten fluorhaltigen Polymers (22) wiederholende Einheiten von Tetrafluorethylen (-C₂F₄-) aufweist.

6. Kathode (26) nach einem der vorhergehenden Ansprüche, **dadurch gekennzeichnet, dass** das Grundgerüst des ersten fluorhaltigen Polymers (22) mindestens eine Seitenkette der allgemeinen Formel (VII) 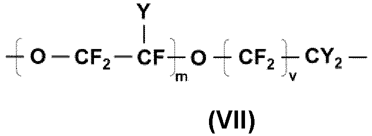 aufweist, worin
- Y ein Fluoratom oder einen linearen, verzweigten oder zyklischen C₁-C₁₀ Perfluoralkylrest bedeutet;
- m 0, 1 oder 2 ist;
- v 0 oder 1 ist; und
wobei die ionische Gruppe der allgemeinen Formel (I) über den CY₂-Rest der Seitenkette an das Grundgerüst gebunden ist.

7. Kathode (26) nach einem der vorhergehenden Ansprüche, **dadurch gekennzeichnet, dass** die Kathode (26) ein zweites fluorhaltiges Polymer (30) umfasst, wobei das zweite fluorhaltige Polymer (30) ausgewählt ist aus der Gruppe der sulfonierten perfluorierten Polymere, vorzugsweise der Derivate von Polytetrafluorethylen (PTFE) mit SO₃Li-haltigen, SO₂-N⁻Li⁺-SO₂CF₃-haltigen und/oder SO₂C(CN)₂Li-haltigen Perfluoralkylseitenketten.

8. Kathode (26) nach einem der vorhergehenden Ansprüche, **dadurch gekennzeichnet, dass** die Kathode (26) mindestens eine Lösungsmittelkomponente (28) umfasst, wobei die Lösungsmittelkomponente (28) ausgewählt ist aus der Gruppe bestehend aus Perfluorcarbonaten, Perfluoraromaten, Perfluorether und Perfluorester sowie Kombinationen und Derivaten davon, weiter bevorzugt, dass die Lösungsmittelkomponente (28) mit dem ersten und/oder zweiten fluorhaltigen Polymer (22, 30) ein Gel bildet.

9. Kathode (26) für eine Festkörperbatterie (10) nach einem der vorhergehenden Ansprüche, **dadurch gekennzeichnet, dass** die Kathode (26) die folgenden Komponenten umfasst, jeweils bezogen auf das Gesamtgewicht der Kathode (26):
(A) 40 - 98 Gew.-% mindestens eines Kathodenaktivmaterials (20);
(B) 0,1 - 30 Gew.-% mindestens eines ersten fluorhaltigen Polymers (22);
(C) 0 - 30 Gew.-% mindestens eines zweiten fluorhaltigen Polymers (30), vorzugsweise ausgewählt ist aus der Gruppe der sulfonierten perfluorierten Polymere, vorzugsweise der Derivate von Polytetrafluorethylen (PTFE) mit SO₃Li-haltigen, SO₂-N⁻Li⁺-SO₂CF₃-haltigen und/oder SO₂C(CN)₂Li-haltigen Perfluoralkylseitenketten;
(D) 0 - 70 Gew.-%, vorzugsweise 0,1 - 70 Gew.-%, mindestens einer Lösungsmittelkomponente (28) bestehend aus Perfluorcarbonat, Perfluoraromat, Perfluorether und Perfluorester sowie Kombinationen und Derivaten davon;
wobei sich die Anteile der Komponenten (A) bis (D) zu 100 Prozent ergänzen.

10. Festkörperbatterie (10) mit einer Kathode (26) nach einem der vorhergehenden Ansprüche, einer Anode (16) und einem Festkörperseparator (18), der die Kathode (26) von der Anode (16) räumlich trennt und mit der Kathode (26) und der Anode (16) ionenleitend in Kontakt steht, wobei der Festkörperseparator (18) mindesten einen keramischen, polymerbasierten oder gelbasierten Festkörperelektrolyten oder Kombinationen davon umfasst.

## Claims

1. Cathode (26) for a solid-state battery (10), wherein the cathode (26) comprises the following components:
(A) at least one active cathode material (20);
(B) at least one first fluorine-containing polymer (22) having an at least partly fluorinated or perfluorinated base skeleton, where the first fluorine-containing polymer (22) contains at least one ionic group of the following formula (I): 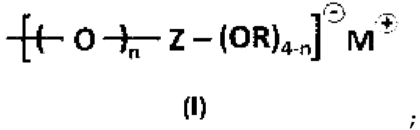 in which
- M is a cation selected from the group consisting of proton and alkali metals;
- n is an integer from 1 to 4;
- Z denotes a central ion selected from the group consisting of aluminum and boron; and
- R represents a monovalent, optionally fluorine-substituted hydrocarbyl radical and is selected from the group consisting of C₁-C₈-alkyl, C₂-C₁₀-alkenyl, C₂-C₁₀-alkynyl, C₆-C₁₂-cycloalkyl and C₆-C₁₂-aryl;
where the ionic group is bonded to the base skeleton of the first fluorine-containing polymer (22) via at least one bridging oxygen atom in the ionic group.

2. Cathode (26) according to Claim 1, **characterized in that** the hydrocarbyl radical R is at least partly fluorine-substituted, preferably fully fluorine-substituted.

3. Cathode (26) according to either of the preceding claims, **characterized in that** the first fluorine-containing polymer (22) contains at least one ionic end group of the general formula (I) in which n = 1 and/or at least one ionic crosslinking group of the general formula (I) in which n = 2, 3 or 4.

4. Cathode (26) according to any of the preceding claims, **characterized in that** the general formula (I) has one or more of the following features:
- Z denotes aluminum
- M denotes lithium; and
- R represents a linear, branched or cyclic C₁-C₁₀ perfluoroalkyl radical, preferably a trifluoromethyl radical, more preferably a perfluoro-tert-butyl radical.

5. Cathode (26) according to any of the preceding claims, **characterized in that** the base skeleton of the first fluorine-containing polymer (22) has repeat units of tetrafluoroethylene (-C₂F₄-) .

6. Cathode (26) according to any of the preceding claims, **characterized in that** the base skeleton of the first fluorine-containing polymer (22) includes at least one side chain of the general formula (VII) 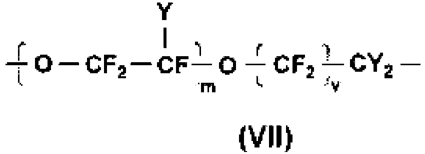 in which
- Y denotes a fluorine atom or a linear, branched or cyclic C₁-C₁₀ perfluoroalkyl radical;
- m is 0, 1 or 2;
- v is 0 or 1; and
where the ionic group of the general formula (I) is bonded to the base skeleton via the CY₂ radical of the side chain.

7. Cathode (26) according to any of the preceding claims, **characterized in that** the cathode (26) comprises a second fluorine-containing polymer (30), where the second fluorine-containing polymer (30) is selected from the group of the sulfonated perfluorinated polymers, preferably the derivatives of polytetrafluoroethylene (PTFE) having SO₃Li-containing, SO₂-N⁻Li⁺-SO₂CF₃-containing and/or SO₂C(CN)₂Li-containing perfluoroalkyl side chains.

8. Cathode (26) according to any of the preceding claims, **characterized in that** the cathode (26) comprises at least one solvent component (28), where the solvent component (28) is selected from the group consisting of perfluorocarbonates, perfluoroaromatics, perfluoroethers and perfluoroesters, and combinations and derivatives thereof, more preferably **in that** the solvent component (28) forms a gel with the first and/or second fluorine-containing polymer (22, 30).

9. Cathode (26) for a solid-state battery (10) according to any of the preceding claims, **characterized in that** the cathode (26) comprises the following components, based in each case on the total weight of the cathode (26):
(A) 40-98% by weight of at least one active cathode material (20);
(B) 0.1-30% by weight of at least one first fluorine-containing polymer (22);
(C) 0-30% by weight of at least one second fluorine-containing polymer (30), preferably selected from the group of the sulfonated perfluorinated polymers, preferably from the derivatives of polytetrafluoroethylene (PTFE) having SO₃Li-containing, SO₂-N⁻Li⁺-SO₂CF₃-containing and/or SO₂C(CN)₂Li-containing perfluoroalkyl side chains;
(D) 0-70% by weight, preferably 0.1-70% by weight, of at least one solvent component (28) consisting of perfluorocarbonate, perfluoroaromatic, perfluoroether and perfluoroester, and combinations and derivatives thereof;
where the proportions of components (A) to (D) add up to 100 percent.

10. Solid-state battery (10) having a cathode (26) according to any of the preceding claims, an anode (16) and a solid-state separator (18) that spatially separates the cathode (26) from the anode (16) and is in ion-conducting contact with the cathode (26) and the anode (16), where the solid-state separator (18) comprises at least one ceramic polymer-based or gel-based solid-state electrolyte or combinations thereof.

## Revendications

1. Cathode (26) pour une batterie à l'état solide (10), la cathode (26) comprenant les composants suivants :
(A) au moins un matériau actif de cathode (20) ;
(B) au moins un premier polymère contenant du fluor (22) comportant un squelette de base au moins partiellement fluoré ou perfluoré, le premier polymère contenant du fluor (22) contenant au moins un groupe ionique de formule (I) suivante : 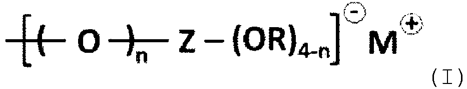 ; dans laquelle,
- M est un cation choisi dans le groupe constitué de proton et de métaux alcalino-terreux ;
- n est un entier de 1 à 4 ;
- Z désigne un ion central choisi dans le groupe constitué de l'aluminium et du bore ; et
- R représente un radical hydrocarboné monovalent éventuellement substitué par le fluor et est choisi dans le groupe constitué d'un alkyle en C₁-C₈, d'un alcényle en C₂-C₁₀, d'un alcynyle en C₂-C₁₀, d'un cycloalkyle en C₆-C₁₂ et d'un aryle en C₆-C₁₂ ;
le groupe ionique étant relié au squelette de base du premier polymère contenant du fluor (22) par l'intermédiaire d'au moins un atome d'oxygène pontant du groupe ionique.

2. Cathode (26) selon la revendication 1, **caractérisée en ce que** le radical hydrocarboné R est au moins partiellement substitué par le fluor, préférablement entièrement substitué par le fluor.

3. Cathode (26) selon l'une quelconque des revendications précédentes, **caractérisée en ce que** le premier polymère contenant du fluor (22) contient au moins un groupe terminal ionique de formule générale (I), dans laquelle n = 1, et/ou au moins un groupe de réticulation ionique de formule générale (I), dans laquelle n = 2, 3 ou 4.

4. Cathode (26) selon l'une quelconque des revendications précédentes, **caractérisée en ce que** la formule générale (I) présente une ou plusieurs des caractéristiques suivantes :
- Z désigne l'aluminium
- M désigne le lithium ; et
- R représente un radical perfluoroalkyle en C₁-C₁₀ linéaire, ramifié ou cyclique, préférablement un radical trifluorométhyle, particulièrement préférablement un radical perfluoro-tert-butyle.

5. Cathode (26) selon l'une quelconque des revendications précédentes, **caractérisée en ce que** le squelette de base du premier polymère contenant du fluor (22) présente des unités répétitives de tétrafluoroéthylène (-C₂F₄-).

6. Cathode (26) selon l'une quelconque des revendications précédentes, **caractérisée en ce que** le squelette de base du premier polymère contenant du fluor (22) présente au moins une chaîne latérale de formule générale (VII) 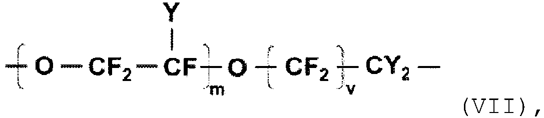 dans laquelle
- Y désigne un atome de fluor ou un radical perfluoroalkyle en C₁-C₁₀ linéaire, ramifié ou cyclique ;
- m vaut 0, 1 ou 2 ;
- v vaut 0 ou 1 ; et
le groupe ionique de formule générale (I) étant lié au squelette de base par l'intermédiaire du radical CY₂ de la chaîne latérale.

7. Cathode (26) selon l'une quelconque des revendications précédentes, **caractérisée en ce que** la cathode (26) comprend un second polymère contenant du fluor (30), le second polymère contenant du fluor (30) étant choisi dans le groupe des polymères perfluorés sulfonés, préférablement des dérivés de polytétrafluoroéthylène (PTFE) comportant des chaînes latérales perfluoroalkyle contenant SO₃Li, contenant SO₂-N⁻Li⁺-SO₂CF₃ et/ou contenant SO₂C(CN)₂Li.

8. Cathode (26) selon l'une quelconque des revendications précédentes, **caractérisée en ce que** la cathode (26) comprend au moins un composant solvant (28), le composant solvant (28) étant choisi dans le groupe constitué des perfluorocarbonates, des composés aromatiques perfluorés, des éthers perfluorés et des esters perfluorés, ainsi que des combinaisons et des dérivés de ceux-ci, plus préférablement, **en ce que** le composant solvant (28) forme un gel avec le premier et/ou le second polymère contenant du fluor (22, 30).

9. Cathode (26) pour une batterie à l'état solide (10) selon l'une quelconque des revendications précédentes, **caractérisée en ce que** la cathode (26) comprend les composants suivants, respectivement basés sur le poids total de la cathode (26) :
(A) 40 à 98 % en poids d'au moins un matériau actif de cathode (20) ;
(B) 0,1 à 30 % en poids d'au moins un premier polymère contenant du fluor (22) ;
(C) 0 à 30 % en poids d'au moins un second polymère contenant du fluor (30), préférablement choisi dans le groupe des polymères perfluorés sulfonés, préférablement des dérivés de polytétrafluoroéthylène (PTFE) comportant des chaînes latérales perfluoroalkyle contenant SO₃Li, contenant SO₂-N⁻Li⁺-SO₂CF₃ et/ou contenant SO₂C(CN)₂Li ;
(D) 0 à 70 % en poids, préférablement 0,1 à 70 % en poids, d'au moins un composant solvant (28) constitué de perfluorocarbonate, composé aromatique perfluoré, éther perfluoré et ester perfluoré ainsi que de combinaisons et de dérivés de ceux-ci ;
la somme des proportions des composants (A) à (D) étant égale à 100 %.

10. Batterie à l'état solide (10) comprenant une cathode (26) selon l'une quelconque des revendications précédentes, une anode (16) et un séparateur à l'état solide (18) qui sépare la cathode (26) de l'anode (16) dans l'espace et est en contact conducteur d'ions avec la cathode (26) et l'anode (16), le séparateur à l'état solide (18) comprenant au moins un électrolyte à l'état solide céramique, à base de polymère ou à base de gel ou des combinaisons de ceux-ci.
